# EUROPEAN PATENT APPLICATION

(11) **EP 2 927 197 A1**
(43) Date of publication of application: **07.10.2015**
(21) Application number: 13859161.5
(22) Date of filing: 02.09.2013
(51) Int. Cl.: C02F 9/00, C02F 1/28, C02F 1/46, C02F 1/52, C02F 1/76, C02F 3/30, C02F 3/34

(54) **SYSTEM FOR TREATING COAL GASIFICATION WASTEWATER, AND METHOD FOR TREATING COAL GASIFICATION WASTEWATER**

(30) Priority: 30.11.2012 JP 2012261913
(71) Applicant: Organo Corporation, Tokyo 136-8631 (JP)
(72) Inventor: TANAKA, Motoki, Tokyo 136-8631 (JP); TOBA, Yuichiro, Tokyo 136-8631 (JP)
(74) Representative: Müller-Boré & Partner Patentanwälte PartG mbB
(86) International application number: PCT/JP2013/073472
(87) International publication number: WO 2014/083903

(57) **Abstract**

Provided is a system for treating coal gasification wastewater, whereby it becomes possible to remove a cyan compound, a fluorine compound, a selenium compound, ammonia nitrogen and a COD component contained in the coal gasification wastewater with high efficiency to achieve satisfactory quality of treated water, to reduce the content of a toxic substance in produced sludge, and can dispose waste materials easily. A system for treating coal gasification wastewater, which is equipped with: a high-temperature alkaline chlorination treatment unit (10) for decomposing at least a cyan compound, ammonia nitrogen and a COD component by such a high-temperature alkaline chlorination treatment that an oxidizing agent is added and the reaction is carried out under warmed conditions; a fluorination treatment unit (50) for removing at least a fluorine compound by a coagulation-sedimentation treatment and/or an adsorption treatment; and a selenium treatment unit (52) for removing a selenium compound by such a reduction removal treatment that the selenium compound is reduced and then the reduced selenium compound is removed and/or an adsorption treatment. In the system, the fluorination treatment unit (50) and the selenium treatment unit (52) are arranged downstream of the high-temperature alkaline chlorination treatment unit (10).

## Description

### [TECHNICAL FIELD]

The present invention relates to a system and a method for treating coal gasification wastewater which is discharged mainly from coal fired power plants and contains cyanide compounds, fluorine compounds, selenium compounds, ammoniacal nitrogen, and COD components.

### [BACKGROUND ART]

Power generation by gas turbines or the like using gas generated from coal gasification including hydrogen, hydrocarbon, and carbon monoxide has been considered. For example, a well-known coal fired power generation includes a coal gasification combination power generation combining this gas turbine power generation having higher efficiency than conventional thermal power generation and a stream turbine, and a coal gasification fuel cell combination power generation which further incorporates a fuel cell power generation.

Gas scrubbing wastewater generated by a coal gasification combination power generation plant or the like (in other words, coal gasification wastewater) contains cyanide compounds, fluorine compounds, selenium compounds, ammoniacal nitrogen, and COD components. Therefore, it is necessary to treat wastewater to achieve water quality that is dischargeable and reusable by removing these components. For treating coal gasification wastewater, wastewater treatment systems combining treatment methods for respective components have been considered.

For example, Patent Document 1 discloses a method for treating coal gasification wastewater including processes (1) to (4) shown below in which process (1) is performed prior to process (2).
(1) Fluorine removal process for removing fluorine by coagulation sedimentation.
(2) Cyanide decomposition process for decomposing cyanide by wet oxidation or thermal hydrolysis.
(3) Selenium treatment process for reducing selenate ions with a metal reductant.
(4) COD/ammonia removal process for removing COD and/or ammonia.

Patent Document 2 discloses a method for treating wastewater which is discharged when the gas obtained by partially oxidizing fossil fuel is wet-scrubbed. Patent Document 2 describes a wastewater treatment method which includes a free cyanide removal process for removing free cyanide contained in wastewater by adjusting the wastewater to the acid side and aerating the wastewater, a biological treatment process for biologically treating the wastewater which has been treated in the free cyanide removal process, and a decomposition treatment process for decomposing COD components contained in the wastewater which has been treated in the biological treatment process.

Regarding the cyanide treatment, for example, in the method disclosed in Patent Document 1, coagulation sedimentation is applied as a fluorine removal process prior to the cyanide treatment. In this process, sludge including fluorine compounds is produced. Because cyanide compounds are contained in the sludge, the sludge must be handled as an industrial waste subject to special control when disposing of the sludge.

For treating cyanide/COD, when performing the wet oxidation or thermal hydrolysis as disclosed in Patent Document 1, as a high-temperature and high-pressure treatment is performed, it is necessary to arrange the device to have a heat and pressure-resistant design. Therefore, there is concern that an initial cost and a maintenance cost of the device (in other words, facility cost) will be increased. Further, because the decomposition is possible only down to a formic acid (COD) and ammonia as decomposition products in the thermal hydrolysis treatment, it is required to separately provide a COD/ammonia removal process. As a result, the device design may become complicated, increasing the facility cost.

Further, in the free cyanide removal by aerating described in the method of Patent Document 2, when the wastewater contains a large amount of suspended solids (SS) like the coal gasification wastewater, there is a risk of performance deterioration due to filler clogging a stripping column. In addition, a cyanide gas collection and decomposition device is separately required.

In order to treat selenium, in the method of Patent Document 1, a reduction treatment with a metallic reductant is performed. Because metallic reduction agents used in the reduction treatment of selenium acid are expensive in a, method for chemically reducing the selenium acid, there is a demand for a treatment method with a lower running cost.

As described above, wastewater treatment techniques are required to sufficiently treat the cyanide compounds, fluorine compounds, selenium compounds, ammoniacal nitrogen, and COD components, which are contained in coal gasification wastewater.

### [PRIOR ART]

### [Patent Documents]

Patent Document 1: JP 2010-221151 A
Patent Document 2: JP 2012-076058 A

### [DISCLOSURE OF THE INVENTION]

### [Problems to be Solved by the Invention]

An object of the present invention is to provide a system and a method for treating coal gasification wastewater which can efficiently remove cyanide compounds, fluorine compounds, selenium compounds, ammoniacal nitrogen, and COD components to obtain treated water of satisfactory quality in such a manner that the amount of hazardous substances contained in produced sludge is small, facilitating the disposal of the waste.

### [Means for Solving the Problems]

The present invention provides a coal gasification wastewater treatment system for treating coal gasification wastewater containing a cyanide compound, a fluorine compound, a selenium compound, ammoniacal nitrogen, and a COD component. The coal gasification wastewater treatment system comprises (1) a cyanide/ammonia/COD treatment unit for decomposing at least the cyanide compound, the ammoniacal nitrogen, and the COD component by a high-temperature alkaline chlorination treatment in which an oxidant is added to be reacted while being heated, (2) a fluorine treatment unit for removing the fluorine compound by at least one of a coagulation sedimentation treatment and an adsorption treatment, and (3) a selenium treatment unit for removing the selenium compound by reducing the selenium compound, and then applying at least one of a removal-by-reduction treatment and an adsorption treatment to remove the reduced selenium compound. The fluorine treatment unit and the selenium treatment unit are arranged downstream of the cyanide/ammonia/COD treatment unit.

It is preferable that, in the coal gasification wastewater treatment system, the fluorine treatment unit removes the fluorine compound by the coagulation sedimentation treatment.

It is further preferable that, in the coal gasification wastewater treatment system, the selenium treatment unit removes the selenium compound by reducing the selenium compound with at least one of metal and metal salt, and then applying a removal-by-reduction treatment that removes the reduced selenium compound.

It is further preferable that, in the coal gasification wastewater treatment system, the metal and the metal salt are iron or iron salt.

It is further preferable that, in the coal gasification wastewater treatment system, the iron salt is divalent iron salt.

It is further preferable that, in the coal gasification wastewater treatment system, the fluorine treatment unit is arranged downstream of the selenium treatment unit when the selenium treatment unit removes the selenium compound by reducing the selenium compound with at least one of metal and metal salt, and then applying a removal-by-reduction treatment that removes the reduced selenium compound.

It is further preferable that, in the coal gasification wastewater treatment system, the selenium treatment unit removes the selenium compound by reducing the selenium compound by a biological treatment, and then applying a removal-by-reduction treatment that removes the reduced selenium compound.

It is further preferable that, in the coal gasification wastewater treatment system, the selenium treatment unit is arranged downstream of the fluorine treatment unit when the selenium treatment unit removes the selenium compound by reducing the selenium compound by a biological treatment, and then removing the selenium compound by a removal-by-reduction treatment that removes the reduced selenium compound.

It is further preferable that, in the coal gasification wastewater treatment system, an adsorption treatment unit using an adsorbent which can adsorb at least one of the fluorine compound and the selenium compound is provided downstream of the fluorine treatment unit and the selenium treatment unit.

It is further preferable that, in the coal gasification wastewater treatment system, the fluorine treatment unit in which the fluorine compound is removed by the adsorption treatment is used when the concentration of the fluorine compound in the coal gasification wastewater is 30 ppm or less, and the selenium treatment unit in which the selenium compound is removed by the adsorption treatment is used when the concentration of the selenium compound in the coal gasification wastewater is 3 ppm or less.

It is further preferable that, in the coal gasification wastewater treatment system, a salt water electrolysis unit that supplies sodium hypochlorite as the oxidant is provided.

The present invention further provides a coal gasification wastewater treatment method for treating coal gasification wastewater containing a cyanide compound, a fluorine compound, a selenium compound, ammoniacal nitrogen, and a COD component. The coal gasification wastewater treatment method comprises (1) a cyanide/ammonia/COD treatment process for decomposing at least the cyanide compound, the ammoniacal nitrogen, and the COD component by a high-temperature alkaline chlorination treatment in which an oxidant is added to be reacted while being heated, (2) a fluorine treatment process for removing at least the fluorine compound by at least one of a coagulation sedimentation treatment and an adsorption treatment, and (3) a selenium treatment process for removing the selenium compound by reducing the selenium compound, and then applying at least one of a removal-by-reduction treatment and an adsorption treatment to remove the reduced selenium compound. The fluorine treatment process and the selenium treatment process are performed after the cyanide/ammonia/COD treatment process.

It is preferable that, in the coal gasification wastewater treatment method, the fluorine compound is removed by the coagulation sedimentation treatment in the fluorine treatment process.

It is further preferable that, in the coal gasification wastewater treatment method, the selenium compound is reduced in the selenium treatment process by reducing the selenium compound with at least one of metal and metal salt, and then applying a removal-by-reduction treatment that removes the reduced selenium compound.

It is further preferable that, in the coal gasification wastewater treatment method, the metal and the metal salt are iron or iron salt.

It is further preferable that, in the coal gasification wastewater treatment method, the iron salt is divalent iron salt.

It is further preferable that, in the coal gasification wastewater treatment method, the fluorine treatment process is performed after the selenium treatment process when the selenium compound is removed in the selenium treatment process by reducing with at least one of metal and metal salt, and then applying a removal-by-reduction treatment that removes the reduced selenium compound.

It is further preferable that, in the coal gasification wastewater treatment method, the selenium compound is removed in the selenium treatment process by reducing the selenium compound by a biological treatment, and then applying a removal-by-reduction treatment that removes the reduced selenium compound.

It is further preferable that, in the coal gasification wastewater treatment method, the selenium treatment process is performed after the fluorine treatment process when the selenium compound is removed in the selenium treatment process by reducing the selenium compound by a biological treatment, and then applying a removal-by-reduction treatment that removes the reduced selenium compound.

It is further preferable that, in the coal gasification wastewater treatment method, an adsorption treatment process using an adsorbent which can adsorb at least one of the fluorine compound and the selenium compound is provided after the fluorine treatment process and the selenium treatment process.

It is further preferable that, in the coal gasification wastewater treatment method, the fluorine treatment process in which the fluorine compound is removed by the adsorption treatment is performed when the concentration of the fluorine compound in the coal gasification wastewater is 30 ppm or less, and the selenium treatment process in which the selenium compound is removed by the adsorption treatment is performed when the concentration of the selenium compound in the coal gasification wastewater is 3 ppm or less.

It is further preferable that, in the coal gasification wastewater treatment method, sodium hypochlorite produced by salt water electrolysis is supplied as the oxidant in the cyanide/ammonia/COD treatment process.

### [Effects of the Invention]

According to the present invention, it is possible to efficiently remove cyanide compounds, fluorine compounds, selenium compounds, ammoniacal nitrogen, and COD components in coal gasification wastewater and obtain high quality treated water by combining a cyanide/ammonia/COD treatment by a high-temperature alkaline chlorination treatment, a fluorine treatment by at least one of a coagulation sedimentation treatment and an adsorption treatment, and a selenium treatment by at least one of a removal-by-reduction treatment and an adsorption treatment of selenium compounds such that the fluorine treatment and the selenium treatment are performed after the cyanide/ammonia/COD treatment. Further, as the amount of hazardous substances in the produced sludge is small, the sludge is not required to be treated as waste subject to special control, facilitating the disposal of the waste.

### [BRIEF DESCRIPTION OF THE DRAWINGS]

FIG. 1 is a schematic diagram showing an example of a coal gasification wastewater treatment system according to an embodiment of the present invention.
FIG. 2 is a schematic diagram showing another example of a coal gasification wastewater treatment system according to an embodiment of the present invention.
FIG. 3 is a schematic diagram showing yet another example of a coal gasification wastewater treatment system according to an embodiment of the present invention.
FIG. 4 is a schematic diagram showing yet another example of a coal gasification wastewater treatment system according to an embodiment of the present invention.
FIG. 5 is a schematic diagram showing yet another example of a coal gasification wastewater treatment system according to an embodiment of the present invention.
FIG. 6 is a schematic diagram showing yet another example of a coal gasification wastewater treatment system according to an embodiment of the present invention.
FIG. 7 is a schematic diagram showing yet another example of a coal gasification wastewater treatment system according to an embodiment of the present invention.
FIG. 8 is a schematic diagram showing yet another example of a coal gasification wastewater treatment system according to an embodiment of the present invention.
FIG. 9 is a schematic diagram showing yet another example of a coal gasification wastewater treatment system according to an embodiment of the present invention.
FIG. 10 is a schematic diagram of a filter press type dehydration test device used in embodiment examples of the present invention.

### [EMBODIMENTS FOR CARRYING OUT THE INVENTION]

Embodiments of the present invention are described below. The embodiments are merely examples of the present invention. The present invention should not be limited to those embodiments.

The inventors of the present invention diligently made a study to realize a coal gasification wastewater treatment system which can achieve a satisfactory performance while maintaining a low device cost, and developed such a system which performs a combination of a cyanide/ammonia/COD treatment by a high-temperature alkaline chlorination treatment, a fluorine treatment by at least one of a coagulation sedimentation treatment and an adsorption treatment, and a selenium treatment by at least one of a removal-by-reduction treatment and an adsorption treatment such that the fluorine treatment and the selenium treatment are performed after the cyanide/ammonia/COD treatment.

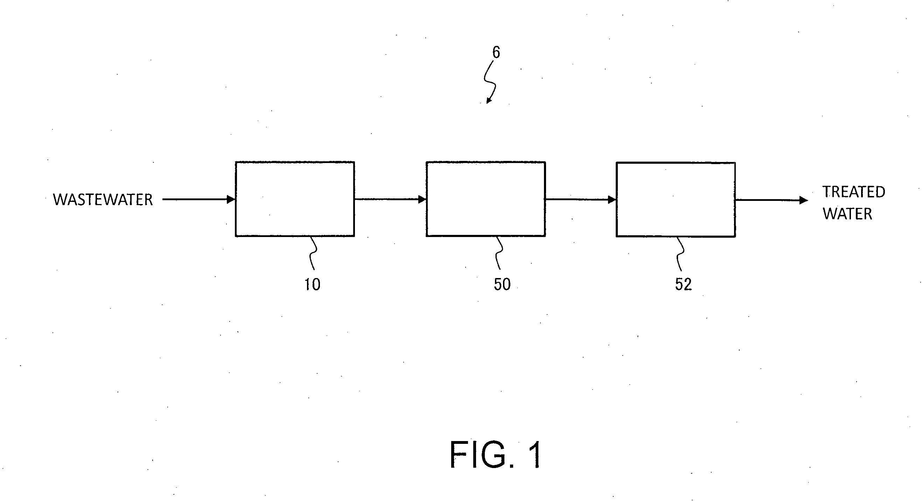

FIG. 1 is a schematic diagram showing one example of a coal gasification wastewater treatment system according to an embodiment of the present invention. The structure of the system is described here. A coal gasification wastewater treatment system 6 includes a high-temperature alkaline chlorination treatment device 10 as a cyanide/ammonia/COD treatment unit, a fluorine treatment device 50 as a fluorine treatment unit, and a selenium treatment device 52 as a selenium treatment unit, such that the fluorine treatment device 50 and the selenium treatment device 52 are arranged downstream of the high-temperature alkaline chlorination treatment device 10.

In a coal gasification wastewater treatment system 6 in FIG. 1, a source water pipe is connected at an inlet of the high-temperature alkaline chlorination treatment device 10. An outlet of the high-temperature alkaline chlorination treatment device 10 and an inlet of the fluorine treatment device 50 are connected to each other by a pipe or the like, and an outlet of the fluorine treatment device 50 and an inlet of the selenium treatment device 52 are also connected to each other by a pipe or the like. An outlet of the selenium treatment device 52 is connected to a treated water pipe.

A method for treating coal gasification wastewater and operations of the coal gasification wastewater treatment system 6 according to the present invention are described below.

Coal gasification wastewater, which is source water, is sent to the high-temperature alkaline chlorination treatment device 10 where at least cyanide compounds, ammoniacal nitrogen, and COD components are decomposed by a high-temperature alkaline chlorination treatment in which an oxidant is added to be reacted while being heated (cyanide/ammonia/COD treatment process). The cyanide/ammonia/COD treated water is sent to the fluorine treatment device 50 where the fluorine compounds are removed by at least one of a coagulation sedimentation treatment and an adsorption treatment (fluorine treatment process). The fluorine treated water is sent to the selenium treatment device 52 where the selenium compounds are removed by at least one of a removal-by-reduction treatment, in which the selenium compounds are reduced and then the reduced selenium compounds are removed, and an adsorption treatment (selenium treatment process), to obtain treated water. The treated water is discharged or reused after being further treated by filtering, activated carbon adsorption, neutralization, or the like, as required.

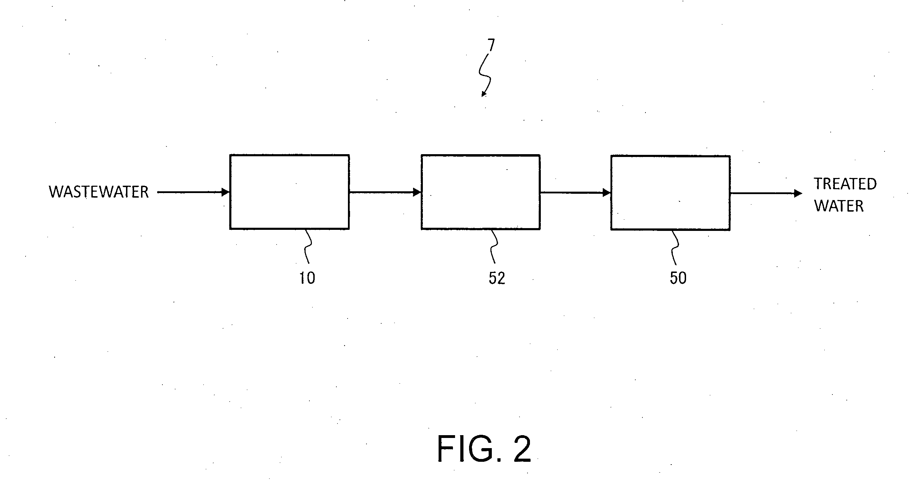

FIG. 2 is a schematic diagram showing another example of a coal gasification wastewater treatment system according to an embodiment of the present invention. In a coal gasification wastewater treatment system 7 in FIG. 2, a source water pipe is connected at an inlet of the high-temperature alkaline chlorination treatment device 10. An outlet of the high-temperature alkaline chlorination treatment device 10 and an inlet of the selenium treatment device 52 are connected to each other by a pipe or the like, and an outlet of the selenium treatment device 52 and an inlet of the fluorine treatment device 50 are also connected to each other by a pipe or the like. An outlet of the fluorine treatment device 50 is connected to a treated water pipe.

Coal gasification wastewater, which is source water, is sent to the high-temperature alkaline chlorination treatment device 10 where cyanide, ammonia, and COD are treated (cyanide/ammonia/COD treatment process). The cyanide/ammonia/COD treated water is sent to the selenium treatment device 52 where the selenium compounds are removed by at least one of a removal-by-reduction treatment, in which the selenium compounds are reduced and then the reduced selenium compounds are removed, and an adsorption treatment (selenium treatment process). The selenium treated water is sent to the fluorine treatment device 50 where the fluorine compounds are removed by at least one of a coagulation sedimentation treatment and an adsorption treatment (fluorine treatment process) to obtain treated water. The treated water is discharged or reused after being further treated by filtering, activated carbon adsorption, neutralization, or the like, as required.

Using the treatment method of coal gasification wastewater and the coal gasification wastewater treatment systems 6, 7 according to embodiments of the present invention, cyanide compounds, fluorine compounds, selenium compounds, ammoniacal nitrogen, and COD components contained in coal gasification wastewater can be efficiently removed to obtain treated water having a satisfactory water quality such that the treated water can be discharged or reused.

The coal gasification wastewater to be treated in embodiments of the present invention may contain gas scrubbing wastewater which is produced at a coal fired power plant or other facilities where power is generated by using gas containing such as hydrogen, hydrocarbon, and carbon monoxide obtained by coal gasification in a coal gasification combination power generation combining a gas turbine power generation and a steam turbine power generation, and further in a coal gasification and fuel cell combination power generation which further incorporates a fuel cell power generation.

The cyanide compounds contained in the coal gasification wastewater to be treated include, for example, cyanide ions, hydrogen cyanide, and cyanide metal complexes. The fluorine compounds include, for example, fluorine ions and calcium fluoride. The selenium compounds include, for example, hexavalent selenium such as selenium acid (SeO₄²⁻), tetravalent selenium such as selenious acid (SeO₃²⁻), and elemental selenium. The ammoniacal nitrogen includes, for example, ammonium ions. The COD components include, for example, an oxidizable substance which is measured as CODMn or CODCr regardless of being organic or inorganic. For example, low-molecular-weight organic acids such as a formic acid can be listed as a COD component contained in the coal gasification wastewater. However, the COD component is not limited to this example.

### <Cyanide/ammonia/COD Treatment Process (High-temperature Alkaline Chlorination Treatment) >

A method and a system for treating coal gasification wastewater according to embodiments of the present invention are characterized by using a high-temperature alkaline chlorination treatment for treating cyanide compounds in coal gasification wastewater.

The "high-temperature alkaline chlorination treatment" here means a decomposition treatment method of wastewater containing cyanide in which the pH of the wastewater containing cyanide is adjusted within a range, for example, from 8 to 13.5, preferably 9 to 13.5, by adding an alkaline agent to the wastewater containing cyanide, and further adding and reacting an oxidant at a liquid temperature of 70 to 95°C. For example, while raising the temperature of the coal gasification wastewater from room temperature to a range from 70°C to the boiling point and maintaining the liquid temperature in that range, oxidation-reduction potential of the coal gasification wastewater is measured from room temperature until the oxidation-reduction potential of the coal gasification wastewater reaches the oxidation-reduction potential of the oxidant by adding the oxidant continuously or intermittently from room temperature to a temperature at 70°C or above.

The high-temperature alkaline chlorination treatment has the following advantages:
* The required energy is lower than wet oxidation or thermal hydrolysis, both of which require heating to 150°C or above, because the heating can be 100°C or below.
* The structure of a reaction container can be simpler than for the wet oxidation or thermal hydrolysis, both of which require high pressure, because the decomposition reaction of the cyanide compounds can be performed under a normal pressure.
* A complete decomposition treatment is substantially possible regardless of the form of cyanide compounds. While cyanide compounds in a complex form cannot normally be decomposed in an alkaline chlorination method (without heating operation) which is well-known as a cyanide wastewater treatment technique, the cyanide compounds in a complex form can be decomposed in the high-temperature alkaline chlorination treatment.
* Sludge can be easily disposed of (the sludge can be disposed of not as an industrial waste subject to special control) because the cyanide compounds can be almost completely decomposed and the sludge produced in the succeeding processes contains almost no cyanide compounds.
* Because the reaction is performed in an alkaline region in which cyanide gas is not produced, the safety level is high.

By using the high-temperature alkaline chlorination treatment, ammoniacal nitrogen and COD components in the coal gasification wastewater can be decomposed and removed in addition to the cyanide compounds. As no ammonia and COD removal systems may be required in this way, the system can be simplified so that the downsizing and reduction of the cost of the system can be expected. It should be noted that the cyanide/ammonia/COD treatment, that is, the high-temperature alkaline chlorination treatment, can be applied even when the coal gasification wastewater does not contain ammoniacal nitrogen and COD components.

The high-temperature alkaline chlorination treatment may be a continuous or batch treatment.

It is preferable that the pH before addition of the oxidant is within a range from 8 to 13.5, more preferably pH 9 to 13.5. Cyanide gas can evaporate when the pH before addition of the oxidant is below pH 8. When the pH is higher than pH 13.5, as the change in the oxidation-reduction potential may become small, the control by injecting chemicals may become difficult.

The reaction temperature may be 70°C or higher to decompose cyanide ions and COD. The reaction temperature is preferably 80 °C or higher when the wastewater to be treated includes cyanide compounds in a complex form. Further, the reaction temperature is preferably 95°C or lower so that the coal gasification wastewater does not boil.

As the oxidant used in the high-temperature alkaline chlorination treatment, sodium hypochlorite, hydrogen peroxide, potassium permanganate or the like can be listed as examples. The sodium hypochlorite is preferable because of easy handling and low cost.

A preferable amount of the oxidant to be added is 1.01 times or more the theoretical amount that is required for the reaction with the cyanides, ammoniacal nitrogen, and COD contained in coal gasification wastewater, and 1.5 times or less in view of the reduction of the oxidant to be used.

As the alkaline agent, sodium hydroxide, potassium hydroxide, calcium hydroxide or the like can be listed as examples.

In a method for treating coal gasification wastewater according to an embodiment of the present invention, because the cyanide compounds, ammoniacal nitrogen, and COD components are treated in a high-temperature alkaline chlorination treatment, it is assumed that a large amount of oxidant may be required if applied for the coal gasification wastewater containing these substances at high concentration. In order to avoid transporting the large amount of oxidant, it is preferable to incorporate a salt water electrolysis system into the coal gasification wastewater treatment system so as to supply the required sodium hypochlorite onsite when the sodium hypochlorite is used as the oxidant.

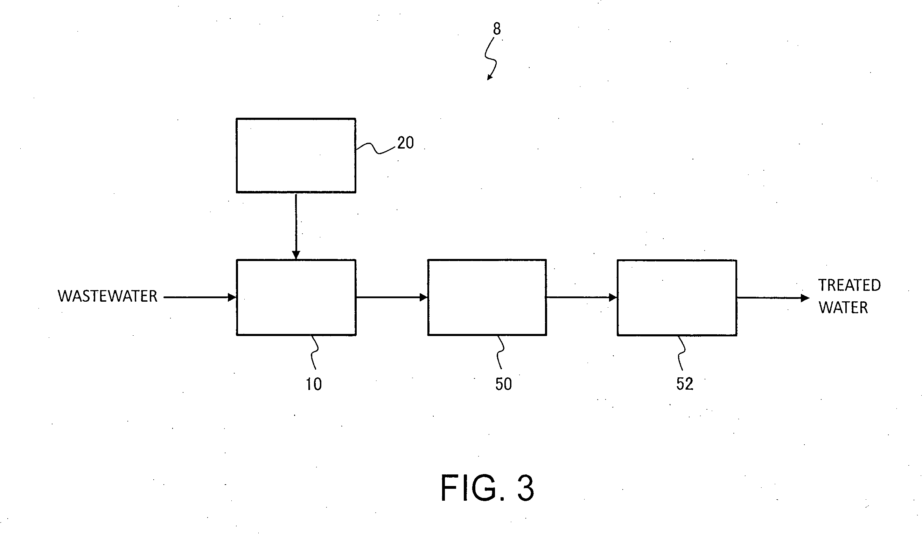

FIG. 3 is a schematic diagram showing a coal gasification wastewater treatment system provided with a salt water electrolysis system. A coal gasification wastewater treatment system 8 is provided with a salt water electrolysis system 20 in addition to the structure shown in FIG. 1. The salt water electrolysis system 20 generates chlorine and caustic soda from salt water by electrolysis so as to synthesize sodium hypochlorite. The sodium hypochlorite produced by the salt water electrolysis system 20 may be supplied to the high-temperature alkaline chlorination treatment device 10 as the oxidant in the high-temperature alkaline chlorination treatment.

In the high-temperature alkaline chlorination treatment device 10, the energy cost may be lowered by using a heat exchanger, heat pump system, or other devices.

### <Fluorine Treatment Process>

In a process for treating fluorine, at least fluorine compounds are removed by at least one of a coagulation sedimentation treatment and an adsorption treatment. When suspended solids (SS) and heavy metals and so on are contained in the wastewater, these substances can be also removed in this fluorine treatment process. In the coagulation sedimentation treatment (fluorine coagulation sedimentation treatment), for example, poorly soluble calcium fluoride is produced by adding a calcium preparation to the water to be treated in a reaction tank (calcium preparation adding process). The produced calcium fluoride is coagulated and settled in a coagulation tank by a coagulant and a polymer coagulant (coagulant adding process), and then separated and removed in a sedimentation tank (sedimentation process).

There is no particular limitation to the number of steps in the fluorine treatment process. The coagulation sedimentation can be performed in two steps in order to improve the fluorine removal performance. It is also possible to reuse sludge as a coagulant by drawing some portions of sludge which has been coagulated and settled, redissolving the sludge using an alkaline agent in a sludge regeneration tank, and returning the sludge into the reaction tank or the sedimentation tank, to thereby improve the fluorine removal performance and reduce the amount of required chemicals and the amount of sludge to be produced.

When adding a calcium preparation in the fluorine coagulation sedimentation treatment, the pH in the calcium preparation adding process is preferably pH 7 to 11. The pH in the coagulant adding process and the sedimentation process that will be later performed is preferably in the neutral range of pH 6 to 8.

As the calcium preparation, calcium chloride, calcium salt such as slaked lime, or the like can be listed as examples.

As the coagulant, an aluminum-based coagulant such as polyaluminum chloride, iron-based coagulant such as ferric chloride, or the like can be listed as examples. In view of fluorine removable performance, an aluminum-based coagulant is preferable.

As the polymer coagulant, anion-based polyacrylamide or the like can be listed as an example.

As a pH adjuster used to adjust the pH, an acid such as hydrochloric acid, an alkali such as sodium hydroxide and potassium hydroxide or the like can be listed as examples.

Conditions such as the amount of calcium preparation, coagulant, and polymer coagulant to be used, and the treatment temperature, may be appropriately determined based on well-known conventional arts.

When the concentration of the fluorine compounds in the water to be treated is low, the fluorine compounds may be removed by an adsorption treatment (fluorine adsorption treatment) in place of the coagulation sedimentation treatment.

A sufficient concentration of the fluorine compounds in the water to be treated in the fluorine adsorption treatment is, for example, 50 ppm or below, preferably 30 ppm or below.

As the fluorine adsorption treatment, a treatment using an adsorbent or the like mainly containing any one of anion-exchange resin, activated alumina, zirconium hydroxide, zirconium ferrite, or the like can be listed as an example. When the saturated adsorption is reached, the adsorbent may be replaced, or a recycling treatment may be applied.

When the concentration of the SS in the water to be treated is high (for example, 10 mg/L or higher), the SS may be removed by a coagulation sedimentation treatment, a filtering treatment, or other treatments prior to the adsorption. For example, with high concentration of SS and low concentration of fluorine compounds, the order of treatments may be first the high-temperature alkaline chlorination treatment, then the selenium treatment (reduction + coagulation sedimentation treatment), and finally the fluorine adsorption treatment.

### <Selenium Treatment Process>

In a selenium treatment process, the selenium compounds are removed by at least one of the removal-by-reduction treatment for removing reduced selenium compounds and an adsorption treatment. In the removal-by-reduction treatment, a reduction treatment is performed, for example, by reducing hexavalent selenium or tetravalent selenium in the water to be treated by using at least one of metal and metal salt to reduce the hexavalent selenium to the tetravalent selenium, and the tetravalent selenium to the elemental selenium, so as to make the selenium insoluble (physical reduction). After reducing the hexavalent selenium or the tetravalent selenium in the water to be treated, the reduced selenium compounds are removed by the coagulation treatment or other treatments. It should be noted that the reduced selenium compounds include the elemental selenium.

Alternatively, the hexavalent selenium or the tetravalent selenium in the water to be treated may be made insoluble by applying a biological treatment to the hexavalent selenium or the tetravalent selenium in the water to be treated under facultative anaerobic conditions to reduce the hexavalent selenium to the tetravalent selenium, and the tetravalent selenium to the elemental selenium (biological reduction). After reducing the hexavalent or tetravalent selenium in the water to be treated, the reduced selenium compounds are removed by a coagulation treatment or other treatments. By applying the selenium treatment by the biological reduction, as it becomes possible to avoid using an expensive metallic reductant, and to perform the reaction at or near neutral pH, the cost of the chemical can be expected to be reduced.

### Physical Reduction

For example, as shown in FIG. 1, the selenium is made insoluble by reducing the fluorine treated water to which the fluorine treatment has been applied in the fluorine treatment device 50 such that the hexavalent selenium or the tetravalent selenium in the water to be treated is reduced from the hexavalent selenium to tetravalent selenium, or from the tetravalent selenium to elemental selenium by using at least one of metal and metal salt in the selenium treatment device 52. Then, the insoluble selenium is removed by coagulation sedimentation, filtering, or other treatments (selenium physical reduction coagulation sedimentation). When the water to be treated contains a large amount of SS, because the SS is removed at the same time in the previous fluorine treatment process, it becomes possible to avoid a reaction block by the SS in the subsequent selenium treatment. Therefore, the treatment processes in this order is effective.

Alternatively, for example, as shown in FIG. 2, the selenium is made insoluble by reducing the hexavalent selenium or the tetravalent selenium in the water to be treated by at least one of metal and metal salt such that the hexavalent selenium is reduced to tetravalent selenium or the tetravalent selenium is reduced to elemental selenium in the selenium treatment device 52. After removing the insoluble selenium by the coagulation sedimentation, filtering, or other treatments (selenium physical reduction coagulation sedimentation), the fluorine treatment is applied in the fluorine treatment device 50.

Although it is normally preferable that an excess of the oxidant used in the high-temperature alkaline chlorination treatment is reduced by introducing a reductant, as the excess of the oxidant used in the high-temperature alkaline chlorination treatment can be reduced at the same time by the metal or metal salt serving as the reductant in the selenium treatment, this process is efficient. Further, as some portions of the fluorine compounds in the water to be treated are removed in the selenium treatment process by the coagulation sedimentation, the amount of chemicals used for the subsequent fluorine treatment process can be reduced.

As the metal used for the physical reduction, a metal reductant such as iron or the like can be listed as an example. As the metal salt, a coagulant having a reduction function, for example, iron salt such as divalent iron salt (ferrous salt) including ferrous chloride and ferrous sulfate, or the like can be listed as an example.

The physical reduction of selenium by metal or metal salt is preferably performed at a high temperature at 40°C or higher. The fluorine treatment by the coagulation is preferably performed at a room temperature at 40°C or below. Because the wastewater is normally heated to 70 to 95°C in the previous high-temperature alkaline chlorination treatment, the thermal energy provided for the heating in the previous process can be efficiently used in a succeeding process by performing the selenium physical reduction treatment prior to the fluorine coagulation process.

### Biological Reduction

For example, as shown in FIG. 1, the selenium is made insoluble by reducing the fluorine treated water to which the fluorine treatment has been applied in the fluorine treatment device 50 such that the hexavalent selenium or the tetravalent selenium in the water to be treated is reduced from the hexavalent selenium to tetravalent selenium, or from the tetravalent selenium to elemental selenium in the selenium treatment device 52. Then, the insoluble selenium is removed by coagulation sedimentation or other treatments. By performing the fluorine treatment in advance, it becomes possible to remove, together with the fluorine, SS which would block the reaction at the subsequent biological reduction. Therefore, the treatment processes in this order is effective.

It is preferable to perform the fluorine coagulation sedimentation treatment and the selenium biological reduction treatment at or near neutral pH, while it is preferable to perform the high-temperature alkaline chlorination treatment at or near alkaline pH. Therefore, it is preferable that the pH is adjusted after performing the high-temperature alkaline chlorination treatment. As it becomes possible to maintain the pH at or near neutral at the beginning of the selenium treatment process by performing the fluorine coagulation sedimentation process prior to the selenium biological reduction treatment process, the biological reduction treatment can be stably performed.

Alternatively, for example, as shown in FIG. 2, the selenium is made insoluble by reducing the hexavalent selenium or the tetravalent selenium in the water to be treated in the selenium treatment device 52 such that the hexavalent selenium is reduced to tetravalent selenium or the tetravalent selenium is reduced to elemental selenium. After removing the insoluble selenium by a coagulation sedimentation treatment or other treatments, the fluorine treatment is performed by the fluorine treatment device 50.

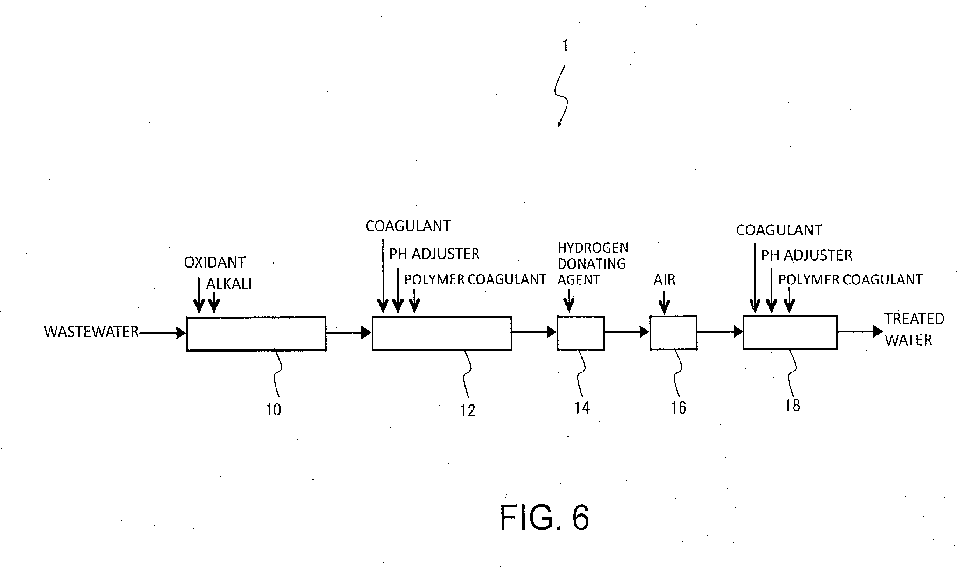

FIG. 6 is a schematic diagram of an example of a coal gasification wastewater treatment system for reducing and removing selenium compounds by using biological sources after performing the fluorine treatment. A coal gasification wastewater treatment system 1 is provided with a high-temperature alkaline chlorination treatment device 10 as a cyanide/ammonia/COD treatment unit, a first coagulation sedimentation device 12 as a fluorine treatment unit, a selenium reduction device 14 as a selenium treatment unit, an organic substance treatment device 16 as an organic substance treatment unit, and a second coagulation sedimentation device 18 as a selenium and SS treatment unit, in this order.

In the coal gasification wastewater treatment system 1 in FIG. 6, a source water pipe is connected at an inlet of the high-temperature alkaline chlorination treatment device 10. An outlet of the high-temperature alkaline chlorination treatment device 10 and an inlet of the first coagulation sedimentation device 12, an outlet of the first coagulation sedimentation device 12 and an inlet of the selenium reduction device 14, an outlet of the selenium reduction device 14 and an inlet of the organic substance treatment device 16, and an outlet of the organic substance treatment device 16 and an inlet of the second coagulation sedimentation device 18 are respectively connected to each other by a pipe or the like. An outlet of the second coagulation sedimentation device 18 is connected to a treated water pipe.

The coal gasification wastewater, which is source water, is sent to the high-temperature alkaline chlorination treatment device 10 where at least cyanide compounds, ammoniacal nitrogen, and COD components are decomposed by a high-temperature alkaline chlorination treatment in which an oxidant is added to be reacted while being heated (cyanide/ammonia/COD treatment process). The cyanide/ammonia/COD treated water is sent to the first coagulation sedimentation device 12 where at least fluorine compounds are removed by the coagulation sedimentation (fluorine treatment process). The fluorine treated water is sent to the selenium reduction device 14 where at least selenium compounds are removed by supplying a hydrogen donating agent such as methanol such that at least selenium compounds are reduced by the action of selenium reducing bacteria (selenium treatment process). The selenium treated water is sent to the organic substance treatment device 16 where aeration or the like is performed to decompose organic substances including at least an excess hydrogen donating agent by biological sources under aerobic conditions (organic substance treatment process). The organic substance treated water is sent to the second coagulation sedimentation device 18 where at least selenium compounds and the SS which are reduced in the reduction process by the coagulation sedimentation are removed (selenium/SS treatment process) to obtain treated water. The treated water is discharged or reused after being further treated by filtering, activated carbon absorption, neutralization, or the like, as required.

### [Selenium Reduction Treatment with Biological Resources]

For example, the water to be treated such as the fluorine treated water is sent to the selenium reduction device 14, where the hexavalent selenium or the tetravalent selenium are respectively reduced to the tetravalent selenium and the elemental selenium by the action of selenium reducing bacteria growing under anaerobic conditions (biological selenium treatment process). As a nutrient source for the selenium reducing bacteria, a hydrogen donating agent is supplied to the selenium reduction device 14. When the selenium reduction is unsatisfactory under anaerobic conditions due to a high concentration of nitrate ion in the fluorine treated water, a separate biological treatment under anaerobic conditions (biological denitrification treatment process) may be performed prior to the biological reduction treatment process.

If necessary, a reduction treatment may be performed before the selenium reduction device 14 after the ammoniacal nitrogen (including excess which could not be removed by the cyanide/ ammonia/COD treatment process) contained in the fluorine treated water is oxidized to nitrate ions by the action of nitrifying bacteria (biological nitrification treatment process). When almost no ammoniacal nitrogen is contained in the fluorine treated water, the biological nitrification treatment process may be omitted.

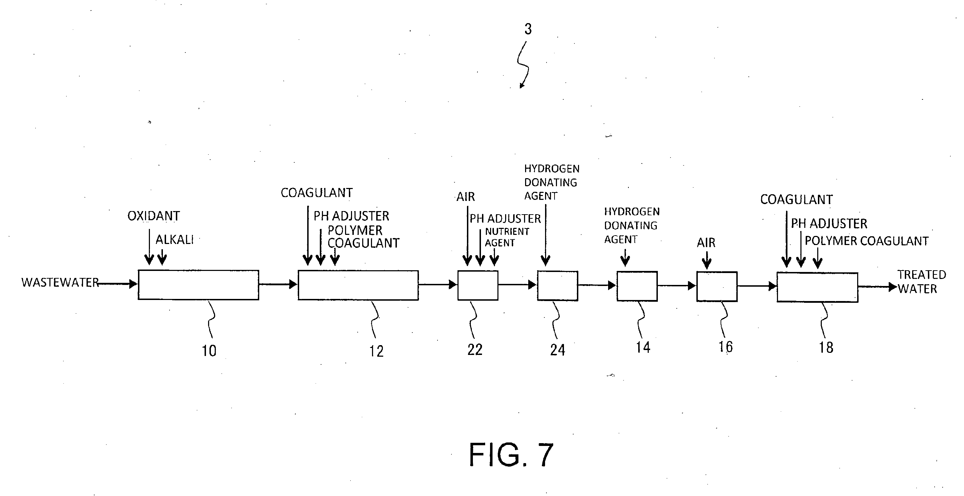

FIG. 7 is a schematic diagram of a coal gasification wastewater treatment system provided with a biological nitrification treatment process and a biological denitrification treatment process. A coal gasification wastewater treatment system 3 is provided with a nitrification device 22 as an ammoniacal nitrogen treatment unit and a denitrification device 24 as a nitric acid treatment unit, in addition to the structure shown in FIG. 6.

In the biological nitrification treatment process, a nutrient agent such as nitrogen compounds and phosphorus compounds may be added as a nutrient source for the nitrification bacteria.

The pH in the biological nitrification treatment process, the biological denitrification treatment process, and the biological reduction treatment process, is preferably in the neutral range of pH 7 to 8.

As the hydrogen donating agent to be introduced into the selenium reduction device 14, alcohol or the like such as methanol and ethanol can be listed as examples.

As the pH adjuster used to adjust the pH, an acid such as a hydrochloric acid or an alkali such as sodium hydroxide and potassium hydroxide can be listed as examples.

Conditions such as the amount of nutrient agent and hydrogen donating agent to be added, and the treatment temperature, may be appropriately determined based on well-known conventional arts.

### [Organic Substance Treatment Process]

In the organic substance treatment process, at least organic substances are decomposed under aerobic conditions by supplying oxygen. As a method for supplying oxygen, aerating for supplying air or the like can be listed as an example. Organic substances such as excess hydrogen donating agent (such as methanol) in the selenium treated water can be decomposed under aerobic conditions and organic substances can be removed.

The pH in the organic substance treatment process is preferably in the neutral range of pH 7 to 8.

Conditions such as the treatment temperature may be appropriately determined based on well-known conventional arts.

### [Selenium/SS Treatment Process (Selenium Coagulation Sedimentation Treatment)]

In the selenium/SS treatment process, insoluble selenium and SS introduced in the biological treatment in the selenium treatment process are sedimented by a coagulation sedimentation treatment (selenium coagulation sedimentation treatment). For example, the coagulation sedimentation is performed in a coagulation tank by adding a coagulant and a polymer coagulant to the organic substance treated water (coagulant adding process) so as to decompose and remove the selenium and SS in a sedimentation tank (sedimentation process).

The pH in the selenium coagulation sedimentation treatment is preferably within a range from pH 5 to 9.

As the coagulant, an iron-based coagulant such as ferric chloride which has a high performance with respect to coagulating tetravalent selenium, elemental selenium, or the like, is preferable.

As the polymer coagulant, anionic polyacrylamide or the like can be listed as an example.

As the pH adjuster used to adjust the pH, an acid such as hydrochloric acid, an alkali such as sodium hydroxide and potassium hydroxide, or the like can be listed as examples.

Conditions such as the amount of the coagulant and the polymer coagulant to be added, and the treatment temperature, may be appropriately determined based on well-known conventional arts.

When the concentration of the selenium compounds in the water to be treated is low, the selenium compounds may be removed by an absorption treatment (selenium absorption treatment) in place of the coagulation sedimentation treatment.

A concentration of the selenium compounds in the water to be treated sufficient for the selenium adsorption treatment is, for example, 5 ppm or below, preferably 3 ppm or below.

As a method for adsorption in the selenium adsorption treatment, a treatment mainly using an adsorbent such as anion exchange resin, activated alumina, zirconium hydroxide, and zirconium ferrite can be listed as an example. When the saturated adsorption is reached, the adsorbent can be replaced or a recycling treatment can be applied.

### <Order of Treatment Processes>

The first purpose of arranging the cyanide/ammonia/COD treatment process by the high-temperature alkaline chlorination treatment upstream in the coal gasification wastewater system is to suppress production of sludge containing cyanide compounds which would be caused if the process were performed downstream. For example, in the method disclosed in Patent Document 1, coagulation sedimentation is applied as a fluorine removal process prior to a cyanide treatment. Because the sludge containing fluorine compounds is produced in this process, and the sludge additionally contains cyanide compounds, it becomes necessary to handle the sludge as an industrial waste subject to special control in disposing of the sludge.

In contrast, in the coal gasification wastewater treatment system according to an embodiment of the present invention, by first performing the high-temperature alkaline chlorination treatment which can almost completely decompose the cyanide compounds, almost no cyanide compounds may be contained downstream in the system. Because cyanide gas caused by a change in the pH or cyanide compounds contained in the sludge are unlikely, this system may be advantageous in the aspects of the operation of the device, safety, and cost.

The second purpose is that even when the coal gasification wastewater contains the SS, by using the high-temperature alkaline chlorination treatment, the performance of a device for removing the cyanide compounds is unlikely to be deteriorated by the SS. In the method disclosed in Patent Document 2, because ammonia is treated prior to the cyanide which is treated by aeration, performance deterioration due to a stripping column clogged with filler due to the SS in the coal gasification wastewater is a matter of concern. In the high-temperature alkaline chlorination treatment, because the cyanide compounds and the ammoniacal nitrogen can be treated with or without the SS, the range of treatable wastewater is larger.

Therefore, an efficient treatment of coal gasification wastewater becomes possible by removing the cyanide compounds, ammoniacal nitrogen, and COD components by the high-temperature alkaline chlorination treatment prior to the fluorine and selenium treatments.

<Adsorption Treatment Process>

When it is necessary to further reduce the concentration of at least one of the selenium and the fluorine in the water to be treated in an embodiment of the present invention, a polishing treatment combining the biological treatment and adsorbent may be applied as the selenium treatment.

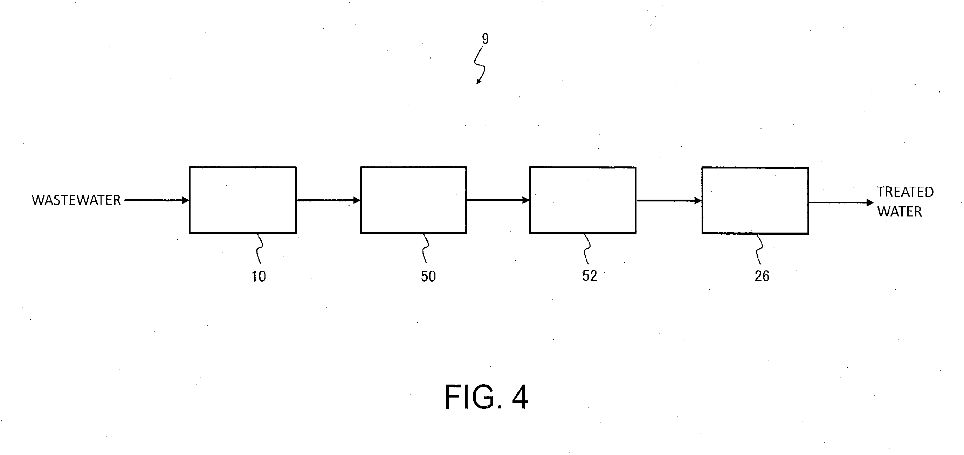

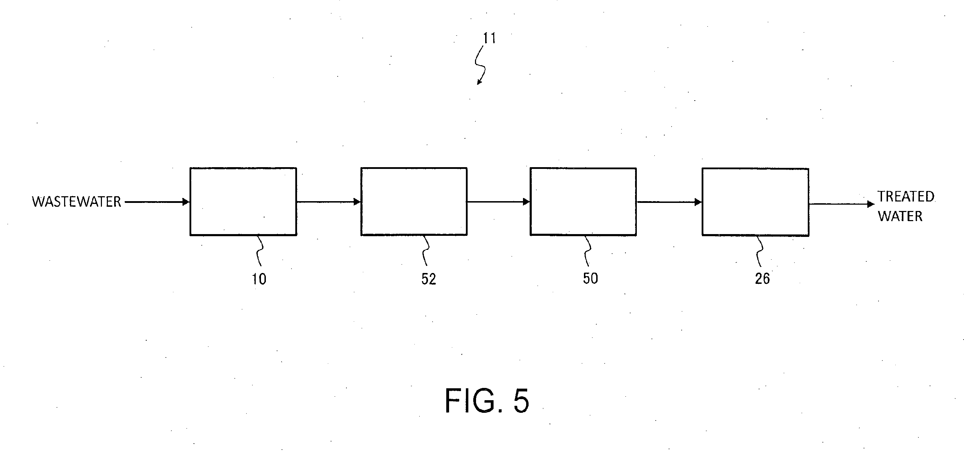

A coal gasification wastewater system 9 in FIG. 4 is provided with an adsorption treatment device 26 as an adsorption treatment unit downstream of the selenium treatment device 52, in addition to the structure shown in FIG. 1. A coal gasification wastewater treatment system 11 shown in FIG. 5 is provided with the adsorption treatment device 26 as an adsorption treatment unit downstream of the fluorine treatment device 50, in addition to the structure shown in FIG. 2.

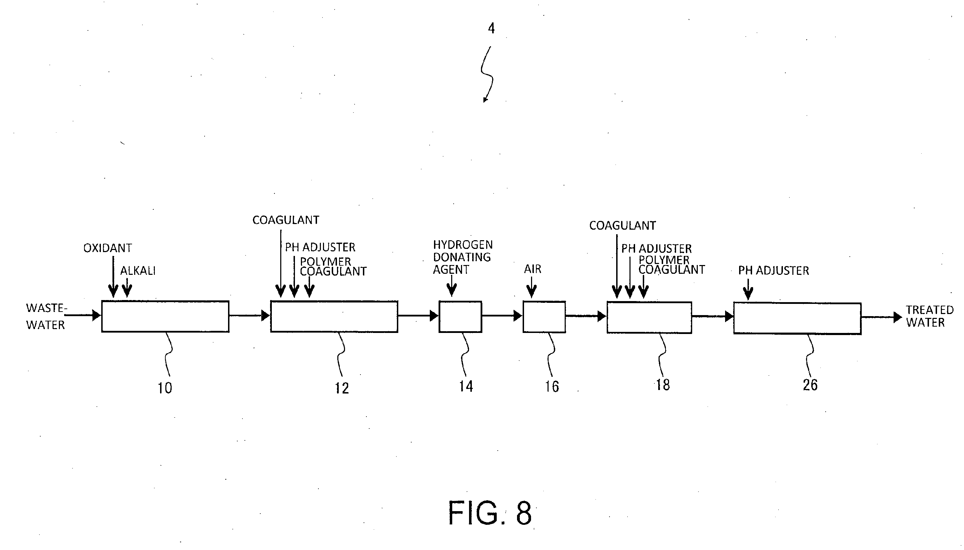

FIG. 8 is a schematic diagram of a coal gasification wastewater treatment system provided with an adsorption treatment device. A coal gasification wastewater treatment system 4 shown in FIG. 8 is provided with the adsorption treatment device 26 as an adsorption treatment unit downstream of the second coagulation sedimentation device 18, in addition to the structure shown in FIG. 6. The adsorption treatment device 26 includes an adsorbent which can adsorb at least one of fluorine compounds and selenium compounds.

The selenium/SS treated water which has been treated by the second coagulation sedimentation device 18 is sent to the adsorption treatment device 26 where at least one of the fluorine compounds and the selenium compounds are adsorbed by the adsorption treatment device 26 (absorption treatment process).

As the adsorbent which can adsorb at least one of the fluorine compounds and the selenium compounds, an adsorbent mainly containing any one of activated alumina, zirconium hydroxide, zirconium ferrite or the like can be listed. Among the adsorbents, an adsorbent mainly containing zirconium ferrite is preferable because such an adsorbent can efficiently remove not only the fluorine compounds but also the selenium compounds. As the adsorbent mainly containing zirconium ferrite, Orlite F^{™} (trademark owned by Organo Corporation) or the like can be listed as an example.

The pH in the adsorption treatment process is preferably pH 3 to 5.5. Although the adsorption performance for the hexavalent selenium and the tetravalent selenium can be maintained at a high level without a significant change even when the pH is lower than pH 3, it is preferable to make the reaction at about pH 3 at the lowest in order to avoid increase in the required amount of pH adjusting chemicals.

### <Other Embodiments>

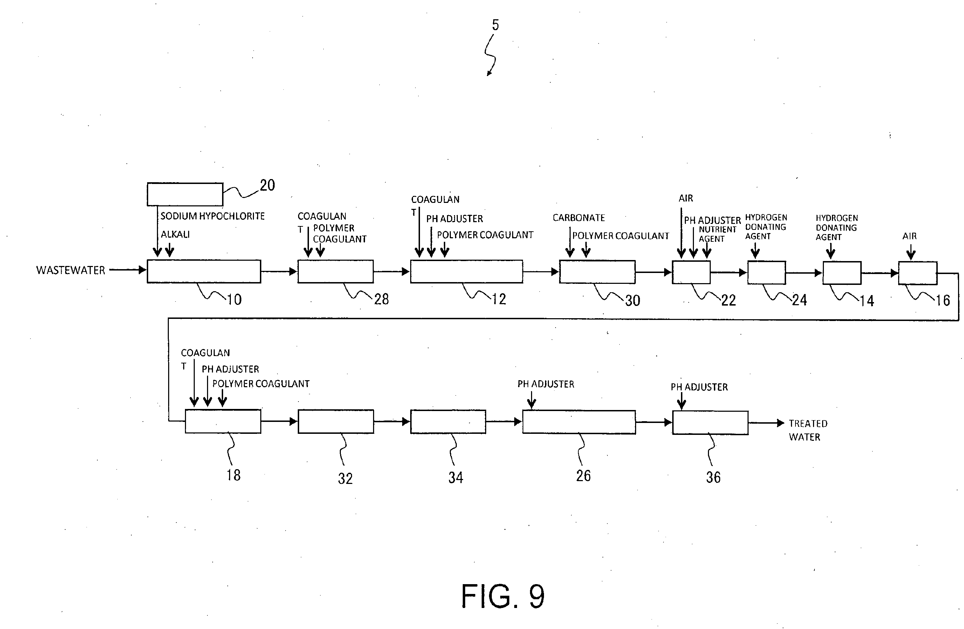

FIG. 9 is a schematic diagram of another example of a coal gasification wastewater treatment system according to an embodiment of the present invention. A coal gasification wastewater treatment system 5 shown in FIG. 9 is provided with a salt water electrolysis system 20 as a salt water electrolysis unit and the adsorption treatment device 26 as an adsorption treatment unit downstream of the second coagulation sedimentation device 18, in addition to the structure shown in FIG. 6. The coal gasification wastewater treatment system 5 is further provided with a cyanide removal device 28 as an cyanide removal unit between the high-temperature alkaline chlorination treatment device 10 and the first coagulation sedimentation device 12, a softening device 30 as a softening unit between the first coagulation sedimentation device 12 and the selenium reduction device 14, as well as a nitrification device 22 as an ammoniacal nitrogen treatment unit, a denitrification device 24 as a nitric acid ion treatment unit, a filtering device 32 as a filtering unit between the second coagulation sedimentation device 18 and the adsorption treatment device 26; an activated carbon adsorption device 34 as an activated carbon adsorbing unit, and a neutralizing device 36 as a neutralizing unit downstream of the adsorption treatment device 26.

In order to more reliably remove the cyanide compounds, in particular, cyanide compounds in a complex form, a cyanide removal device 28 which removes the cyanide as poorly soluble compounds by sedimentation may be provided in, for example, a Prussian blue method (cyanide removal process). In the Prussian blue method, iron ions are added to form a poorly soluble complex with the cyanide compounds to enable sedimentation and separation of the cyanide compounds.

Conditions such as the amount of the iron ions to be added, and the treatment temperature in the cyanide removal process may be appropriately determined based on well-known conventional arts.

At the softening device 30, a carbonate and a polymer coagulant are added to remove calcium (softening process). The softening device 30 may be provided when calcium ions caused by the calcium preparation added by the first coagulation sedimentation device 12 are expected to block a biological reaction in the nitrification, cyanide reduction, denitrification, and oxidation reactions performed downstream.

Conditions such as the amount of the carbonate and the polymer coagulant to be added, and the treatment temperature in the softening process, may be appropriately determined based on well-known conventional arts.

In the filtering device 32, polishing is performed for remaining SS and other substances (filtering process).

In the activated carbon adsorption device 34, polishing is performed for remaining COD components and other substances (activated carbon adsorption process).

In the neutralizing device 36, the wastewater is neutralized by a pH adjuster such as an alkali and an acid (neutralization process). The pH-adjusted treated water is discharged or recycled.

With a coal gasification wastewater treatment system such as the one shown in FIG. 9, it becomes possible to efficiently remove cyanide compounds, fluorine compounds, selenium compounds, ammoniacal nitrogen, and COD components in coal gasification wastewater and obtain high-quality treated water while producing almost no sludge containing hazardous substances such as cyanide.

The present invention is described below in more detail with specific examples and comparative examples. However, the present invention is not limited to the examples described below.

Batch processing tests in the sequence shown below were performed by arranging water simulating the wastewater of coal gasification power generation as the water to be treated, and measuring the quality of the treated water in each process. In order to check for the existence or absence of the elution of substances such as cyanides, elution tests of sludge were also performed by respectively dehydrating the sludge produced in the coagulation sedimentation process to remove suspended substances and fluorine, and the sludges produced in all of the processes were mixed.

As a comparative example, batch processes of coagulation sedimentation filtering were tested by assuming a system which performed the coagulation sedimentation filtering to remove suspended substances and fluorine in the first process of prior arts, and performing the same dehydration as the above embodiment example. The produced sludge was dehydrated and the same elution tests of the sludge as in the above examples were performed.

### [Test Method]

### (1) Preparing Water To Be Treated

Each substance was dissolved in purified water to obtain the concentration shown in Table 1 so as to obtain the water to be treated. The water simulating wastewater of coal gasification power generation mainly contains a formic acid (HCOOH), ammoniacal nitrogen (NH₄-N), and cyanides containing of cyanide ions (CN⁻) and ferricyanide (Fe (CN)₆³⁻), and further fluorine (F) and selenium (Se). The pH was adjusted by sodium hydroxide. The selenium was added as a selenium acid (hexavalent Se).

**[Table1] Preparation of Water To Be Treated**

| Item | Concentration | Item | Concentration | Item | Concentration |
|---|---|---|---|---|---|
| pH | 10.7 | Ammonia | 1000 mg-N/L | Sulfuric acid ions | 1700 mg/L |
| Cyanide ions | 100 mg/L | Total fluorine | 100 mg/L | Chloride ions | 2000 mg/L |
| Ferricyanide | 100 mg/L | Total selenium | 1 mg/L | Calcium sulfate (Solid) | 3900 mg/L |
| formic acid | 1300 mg-C/L | Calcium ions | 2000 mg/L | | |

### (2) Treatment Operations

### <Examples 1 to 3>

Batch processes were performed in the following sequence.
Example 1: High-temperature alkaline chlorination treatment process -> fluorine treatment (fluorine coagulation sedimentation treatment) process -> selenium treatment (selenium biological reduction treatment -> organic substance treatment process -> selenium coagulation sedimentation treatment process) -> adsorption treatment (fluorine and selenium adsorption) process.
Example 2: High-temperature alkaline chlorination treatment process -> fluorine treatment (fluorine coagulation sedimentation treatment) process -> physical reduction treatment (selenium physical reduction coagulation treatment) process -> adsorption treatment (adsorption of fluorine and selenium) process.
Example 3: High-temperature alkaline chlorination treatment -> physical reduction treatment (selenium physical reduction coagulation treatment) process -> fluorine treatment (fluorine coagulation sedimentation treatment) process.

Operation methods in each process are shown below.

### (a) High-temperature Alkaline Chlorination Treatment Process

The water temperature was raised from room temperature (20°C) by blowing steam into the water to be treated (90 L). When the water temperature reached 92°C, the amount of the steam to be blown in was adjusted to maintain the water temperature at that temperature. After the start of the heating, sodium hypochlorite solution continued to be injected while measuring the oxidation-reduction potential (ORP) of the water until the ORP reached 620 mV. When the ORP reached 620 mV, the amount of the sodium hypochlorite solution was adjusted to maintain the ORP at 620 mV. When the ORP did not vary over 1 mV in 5 minutes, the injection of the sodium hypochlorite was stopped, and at the same time, the temperature adjustment was stopped to allow the temperature to drop. The amount of the remaining water to be treated was 103 L. Some of the water to be treated was collected and the water quality was analyzed.

### (b) Fluorine Treatment (Fluorine Coagulation Sedimentation Treatment) Process

Polyaluminum chloride (PAC, 2000 mg/L) was added to the water (30 L, 40°C) undergoing the high-temperature alkaline chlorination treatment in above (a) in Examples 1 and 2, and to the water (25 L, 40°C) undergoing the selenium removable coagulation sedimentation treatment in (d) described below in Example 3. With the pH adjusted to pH 7.0, after rapidly stirring for reaction for 10 minutes, the water was slowly stirred for 5 minutes with organic polymer (anionic polyacrylamide, 2 mg/L) being added to form flocs. Then, after sedimenting the flocs by allowing settlement for 15 minutes, supernatant water (81 L) was collected and the water quality was analyzed.

It should be noted that after removing the supernatant, a further 24 hours were allowed for gravity sedimentation and thickening of the remaining water containing the flocs. Then, further supernatant water was removed above the interface so as to use the remaining sludge as a sludge sample for dehydration. This sludge was equally divided into three portions, each of which was used as a sample for the dehydration and sludge elution test respectively in Examples 1, 2, and 3.

### (c) Selenium Treatment Process

### ((c)-1) Selenium Biological Reduction Treatment

In Example 1, the fluorine removed coagulation sedimentation treated water (27 L) in above (b) was left to cool down to 35°C. Microbial sludge (5 L) which was acclimated in advance in water having a similar quality was introduced so as to contain methanol (40 mg/L) and phosphoric acid (1 mg-P/L). Then, the water was stirred so that the microbial sludge was floated in the water. After stirring for 6 hours under anaerobic conditions without performing oxygen/air blowing, reduced treated water was obtained by removing the microbial sludge which had been sedimented and separated from the water. The water quality of the reduced treated water was analyzed.

### ((c)-2) Organic Substance Treatment Process

In the reduced treated water (25 L) obtained by above (c)-1, microbial sludge (5 L) which was acclimated in advance in water having a similar quality was introduced and stirred while blowing air with an air pump so as to float microbial carrier in a substantially uniform manner in the upper and lower portions of the water. After stirring for 1.5 hours, organic substance oxidative decomposition treated water was obtained by removing the microbial sludge which had been sedimented and separated from the water. The water quality of the oxidative treated water was analyzed.

### ((c)-3) Selenium Coagulation Sedimentation Treatment Process In the organic substance biological oxidative treated water

(20L) obtained by above (c)-2, ferric chloride (FeCl₃, 60 mg-Fe/L) was added. With the pH adjusted to pH 7.0, after rapidly stirring for 10 minutes, the water was slowly stirred for 5 minutes with organic polymer (anionic polyacrylamide, 2 mg/L) being added to form flocs. Then, after sedimenting the flocs by allowing settlement for 15 minutes, supernatant water (24 L) was collected and the water quality was analyzed. It should be noted that after removing the supernatant, a further 24 hours were allowed for gravity sedimentation and thickening of the remaining water (3 L) containing the flocs. Then, further supernatant water was removed above the interface so as to use the remaining sludge as a sludge sample for dehydration.

### (d) Physical Reduction Treatment (Selenium Physical Reduction Coagulation Treatment) Process

Ferrous chloride (FeCL₂, 300 mg-Fe/L) was added to the fluorine removed coagulation sedimentation treated water (70°C, 25 L) in above (b) in Example 2, and to the high-temperature alkaline chlorination treated water (70°C, 30 L) in above (a) in Example 3. With the pH adjusted to pH 9.0, after stirring for 10 minutes, the water was slowly stirred for 5 minutes with organic polymer (anionic polyacrylamide, 2 mg/L) being added to form flocs. Then, after sedimenting the flocs by allowing settlement for 15 minutes, supernatant water (20 L) was collected and the water quality was analyzed. It should be noted that after removing the supernatant, a further 24 hours were allowed for gravity sedimentation and thickening of the remaining water (3 L) containing the flocs. Then, further supernatant water was removed above the interface so as to use the remaining sludge as a sludge sample for dehydration.

### (e) Adsorption Treatment (Fluorine and Selenium Adsorption) Process

Three columns (ϕ25 x fill height 600 mm), filled with adsorbent (Orlite F^{™} manufactured by Organo Corporation) mainly containing zirconium to which an activation treatment was applied using hydrochloric acid, were provided. The adsorption treated water was obtained by adjusting the coagulation sedimentation treated water obtained in above (c) - 3 in Example 1, the selenium removed coagulation sedimentation treated water in above (d) in Example 2, and the coagulation sedimentation treated water in above (b) in Example 3 to 25°C and pH 4.0 using hydrochloric acid, and then causing this adjusted water (12 L/h) to flow downwardly in each column. The quality of the obtained adsorption treated water was analyzed.

### <Comparative Example 1>

### (f) Coagulation Sedimentation

PAC (2000 mg/L) was added to the water to be treated (20°C, 30 L). With the pH adjusted to pH 7.5, after rapidly stirring for reaction for 10 minutes, the water was slowly stirred for 5 minutes with organic polymer (anionic polyacrylamide, 2mg/L) being added to form flocs. Then, after sedimenting the flocs by allowing settlement for 15 minutes, supernatant water (27 L) was collected. It should be noted that after removing the supernatant, a further 24 hours were allowed for gravity sedimentation and thickening of the remaining water (3 L) containing the flocs. Then, further supernatant water was removed above the interface so as to use the remaining sludge as a sludge sample for dehydration.

### (3) Analyzed Items and Analysis Method

Among wastewater standard items, analyzed items were determined to be the following substances contained in water to be treated, and items related to these. Analysis was performed in accordance with Japanese Industrial Standards (JIS K0102).

Analyzed Items: Total cyanide (T-CN), total nitrogen (T-N), CODMn, suspended solids (SS), total fluorine (T-F), total selenium (T-Se), and pH.

### (4) Sludge Dehydration Operation

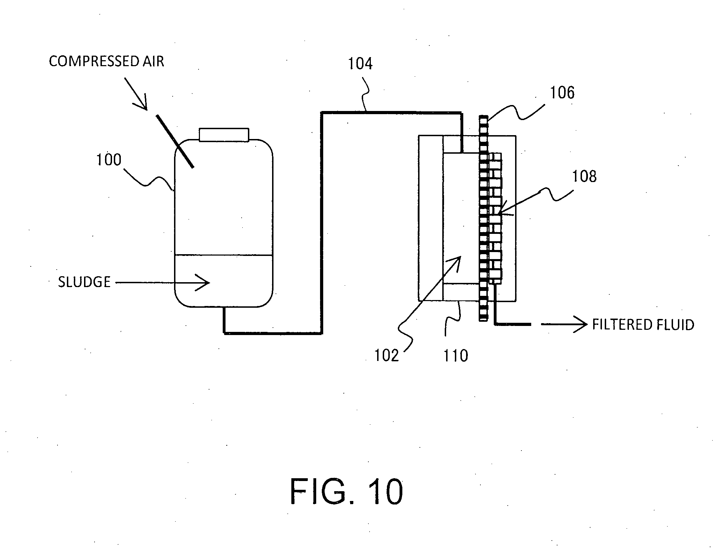

The sludge described below was dehydrated by a filter-press type dehydration test device. As shown in FIG. 10, the test device was provided with a pressure tank 100 (20 L) into which compressed air can be sent, a filter chamber 102 (70 mm in height, 100 mm in width, and 10 mm in depth) including a filter frame 110 and filter cloth 106, and a pipe 104 connecting between the bottom of the pressure tank 100 and the filter chamber 102. The filter cloth 106 was integrated on one side of the filter chamber 102 and slits 108 were provided on the wall outside the filter cloth 106 such that the dehydration filtered fluid was exhausted outside the filter chamber 102 through these slits. Sludge was supplied to the pressure tank 100. Dehydration was performed by pressing the sludge into the filter chamber 102 with compressed air (pressure: 0.5 MPa), and exhausting the filtered fluid passing through the filter cloth 106 out of the filter chamber 102. When the water content of the dehydrated cake in the filter chamber 102 was lowered to about 65%, the supply of the sludge under pressure was stopped and the dehydrated cake was taken out of the filter chamber 102 to be used as a sample for the elution test.

### Dehydration Sample

Sludge in Example 1: All the sludge obtained by mixing the sludge obtained in Process (b) and Process (c) -3 in Example 1 after the 24 hour gravity sedimentation and thickening ((b) and (c) mixed sludge).
Sludge in Example 2: All the sludge obtained by mixing the sludge obtained in Process (b) and Process (d) in Example 2 after the 24 hour gravity sedimentation and thickening ((b) and (d) mixed sludge).
Sludge in Example 3: All the sludge obtained by mixing the sludge obtained in Process (d) and Process (b) in Example 3 after the 24 hour gravity sedimentation and thickening ((d) and (b) mixed sludge).
Sludge in Comparative Example 1: The sludge obtained in Comparative Example 1 after the 24 hour gravity sedimentation and thickening ((f) sludge).

### (5) Sludge Elution Test

An elution test was performed on the dehydration cake obtained in above (4) in accordance with "Assay Method for Substances Such As Metals Contained in Industrial Waste" (Notice from the Japanese Ministry of the Environment). Among reference substances defined in "Determination Criteria Regarding Industrial Waste Including Metals", total cyanide and total selenium which were likely to be contained in the sludge in the present tests were analyzed by using the obtained elution fluid as the water to be analyzed.

### [Test Results]

### < Examples>

### (1) Quality of Treated Water in Each Process

### Example 1

The T-CN was reduced from 175 mg/L in the simulated wastewater to lower than 0.1 mg/L by the high-temperature alkaline chlorination treatment. The simulated wastewater contained 1100 mg/L of T-N, the majority of which was ammoniacal nitrogen. As a result of the high-temperature alkaline chlorination treatment, T-N was reduced to 13 mg/L. The simulated wastewater contained 450 mg/L of CODMn, the majority of which was a formic acid and cyanides. As a result of the high-temperature alkaline chlorination treatment, the CODMn was reduced to 6 mg/L. Consequently, it was confirmed that a system provided with a high-temperature alkaline chlorination treatment can treat coal gasification power generation wastewater containing any of cyanide compounds, ammoniacal nitrogen, and COD components to yield a water quality level which would meet the wastewater standard.

The T-F was reduced from 100 mg/L in the simulated wastewater to 7.8 mg/L in the fluorine coagulation sedimentation treated water. This level already met the wastewater standard. In the adsorption treated water, the T-F was further reduced to less than 4 mg/L. Consequently, it was confirmed that a system sequentially provided with the high-temperature alkaline chlorination treatment and the fluorine coagulation sedimentation treatment can treat coal gasification power generation wastewater additionally containing fluorine to yield a water quality level which would meet the wastewater standard. It was also confirmed that by applying the adsorption process, fluorine was further reduced.

Although the T-Se remained at the same level as in the simulated wastewater at 1.0 mg/L in the selenium biological reduction treated water, the T-Se was reduced to 0.08 mg/L by the selenium coagulation sedimentation treatment process using ferric chloride. It can be assumed that this is because the hexavalent selenium was reduced to tetravalent selenium or elemental selenium in this selenium biological reduction treatment process such that the tetravalent selenium and the elemental selenium which were easily coagulated with the ferric chloride were efficiently removed.

Further, the T-Se was further reduced in the adsorption treated water obtained by passing the filtered water through a zirconium-based adsorbent column to a level which would reliably meet the wastewater reference value of 0.1 mg/L.

Consequently, it was confirmed that a system with the selenium biological reduction treatment arranged after the high-temperature alkaline chlorination treatment and the fluorine treatment can treat coal gasification power generation wastewater additionally containing selenium. It was also confirmed that by providing the system further with an adsorption treatment arranged after the selenium biological reduction treatment, selenium was reduced to a water quality level which would reliably meet the wastewater standard.

**[Table 2] Water Quality in Each Process in Example 1.**

| Water Quality Item | Simulated Wastewater | High-Temperature Alkaline Chlorination Treated Water | Fluorine Coagulation Sedimentation Treated Water | Selenium Biological Reduction Treated Water | Organic Substance Treated Water | Selenium Coagulation Sedimentation Treated Water | Adsorption Treated Water |
|---|---|---|---|---|---|---|---|
| | | | | | | | Zirconium-based Adsorption |
| T-CN (mg/L) | 175 | < 0.1 | < 0.1 | < 0.1 | < 0.1 | < 0.1 | < 0.1 |
| T-N (mg/L) | 1100 | 13 | 14 | 5.0 | 5.3 | 5.0 | 5.0 |
| COD_{Mn} (mg/L) | 450 | 6.2 | 6.7 | 33 | 9.0 | 7.5 | 7.8 |
| SS (mg/L) | 4100 | 4300 | 3.6 | 27 | 22 | < 2 | < 2 |
| T-F (mg/L) | 100 | 110 | 7.8 | 8.1 | 7.9 | 7.3 | < 4 |
| T-Se (mg/L) | 1.0 | 1.2 | 1.1 | 1.0 | 0.8 | 0.08 | 0.03 |
| pH (-) | 10.6 | 8.5 | 7.0 | 6.8 | 6.8 | 6.5 | 3.3 |

### Example 2

The high-temperature alkaline chlorination treatment process and the fluorine coagulation sedimentation process are identical to those in Example 1. In the selenium physical reduction coagulation treatment process with ferrous chloride for the fluorine coagulation sedimentation treated water, the T-Se was reduced from 1.1 mg/L of the fluorine coagulation sedimentation treated water to 0.09 mg/L. T-Se was further reduced in the adsorption treated water obtained by passing the water through an adsorbent column such that the T-Se was reliably lowered than the wastewater reference value of 0.1 mg/L. The fluorine was also reduced less than 4 mg/L.

Consequently, it was confirmed that a system provided with a high-temperature alkaline chlorination treatment, a fluorine coagulation sedimentation treatment, and a selenium physical reduction coagulation treatment, in this order, can treat coal gasification power generation wastewater additionally containing fluorine and selenium. It was also confirmed that by further providing the system with an absorption treatment after these treatments, selenium and fluorine were reduced to a water quality level which would reliably meet the wastewater standards.

**[Table 3] Water Quality in Each Process in Example 2.**

| Water Quality Item | Simulated Wastewater | High-Temperature Alkaline Chlorination Treated Water | Fluorine Coagulation Sedimentation Treated Water | Selenium Reduction Treated Water | Adsorption Treated Water |
|---|---|---|---|---|---|
| T-CN (mg/L) | 175 | < 0.1 | < 0.1 | < 0.1 | < 0.1 |
| T-N (mg/L) | 1100 | 13 | 14 | 12 | 13 |
| COD_{Mn} (mg/L) | 450 | 6.2 | 6.7 | 5.8 | 6.0 |
| SS (mg/L) | 4100 | 4300 | 3.6 | < 2 | < 2 |
| T-F (mg/L) | 100 | 110 | 7.8 | 7.4 | < 4 |
| T-Se (mg/L) | 1.0 | 1.2 | 1.1 | 0.09 | 0.04 |
| pH (-) | 10.6 | 8.5 | 7.0 | 8.8 | 3.2 |

### Example 3

Processes up to the high-temperature alkaline chlorination treatment were identical to those in Example 1. In the selenium physical reduction coagulation treatment process using ferrous chloride for the high-temperature alkaline chlorination treated water, the T-Se was reduced from 1.2 mg/L in the high-temperature alkaline chlorination treated water to 0.08 mg/L. The T-Se was further reduced in the adsorption treated water obtained by passing the treated water after the fluorine coagulation sedimentation treatment through the adsorbent column such that the T-Se was reliably less than the wastewater reference value of 0.1 mg/L.

In the fluorine coagulation sedimentation treatment process, the T-F was reduced from 120 mg/L in the selenium physical reduction coagulation treated water to 7.5 mg/L. The T-F was further reduced to less than 4 mg/L in the adsorption treated water obtained by passing the treated water through the adsorbent column such that the T-F was reliably less than the wastewater reference value of 8 mg/L.

Consequently, it was confirmed that a system provided with a high-temperature alkaline chlorination treatment, a selenium physical reduction coagulation treatment, and a fluorine coagulation sedimentation process, in this order, can treat coal gasification power generation wastewater additionally containing fluorine and selenium. It was also confirmed that by further providing the system with an adsorption treatment after these treatments, selenium and fluorine were reduced to a water quality level which would reliably meet the wastewater standards.

**[Table 4] Water Quality in Each Process in Example 3.**

| Water Quality Item | Simulated Wastewater | High-Temperature Alkaline Chlorination Treated Water | Selenium Coagulation Treated Water | Fluorine Coagulation Sedimentation Treated Water | Adsorption Treated Water |
|---|---|---|---|---|---|
| T-CN (mg/L) | 175 | < 0.1 | < 0.1 | < 0.1 | < 0.1 |
| T-N (mg/L) | 1100 | 13 | 9.2 | 9.8 | 9.8 |
| COD_{Mn} (mg/L) | 450 | 6.2 | 6.4 | 6.7 | 6.0 |
| SS (mg/L) | 4100 | 4300 | 4.8 | < 2 | < 2 |
| T-F (mg/L) | 100 | 110 | 120 | 7.5 | < 4 |
| T-Se (mg/L) | 1.0 | 1.2 | 0.08 | 0.08 | 0.03 |
| pH (-) | 10.6 | 8.5 | 8.9 | 7.0 | 3.2 |

### (2) Sludge Dehydration and Elution Test Results

### Examples 1 to 3

As shown in Table 5, the T-CN in the eluted fluid in all of the dehydrated cakes in Example 1 to 3 was less than 0.1 mg/L and the T-Se was also less than 0.1 mg/L. Therefore, it was confirmed that both met the "Determination Criteria Regarding Industrial Waste Including Metals" (T-CN: 1 mg/L, T-Se: 0. 3 mg/L) . Consequently, it was confirmed that the sludge produced in a system according to the present invention was allowed to be disposed of as an industrial waste in a usual manner such as landfill.

**[Table 5] Elution Test Result of Dehydrated Sludge Cake in Examples.**

| Water Quality Item | Sludge in Example 1 | Sludge in Example 2 | Sludge in Example 3 |
|---|---|---|---|
| Dehydrated Cake Weight(g) | 99 | 104 | 101 |
| Water Content(%) | 64.6 | 65.7 | 65.1 |
| Elution Fluid | | | |
| T-CN (mg/L) | < 0.1 | < 0.1 | < 0.1 |
| T-Se (mg/L) | 0.07 | 0.05 | 0.06 |

### <Comparative Example 1>

While, regarding the quality of the treated water, the SS and the T-F which were the targets of the coagulation sedimentation treatment were reduced below the level that would meet the wastewater standards as shown in Table 6, regarding the hydrated sludge cake produced in the treatment, the T-CN of 7.9 mg/L (much higher than the reference value of 1.0 mg/L) was detected in the elution test (selenium was 0.06 mg/L which was lower than the reference value of 0.3 mg/L). Consequently, it was confirmed that in the prior arts in which the coagulation sedimentation treatment was performed prior to the cyanide decomposition treatment, sludge which must be disposed of as a waste subject to special control was produced.

**[Table 6] Treated Water Quality in Comparative Example**

| Water Quality Item | Simulated Wastewater | Coagulation Sedimentation Treated Water |
|---|---|---|
| T-CN (mg/L) | 175 | 138 |
| T-N (mg/L) | 1100 | 1100 |
| COD_{Mn} (mg/L) | 450 | 410 |
| SS (mg/L) | 4100 | < 2 |
| T-F (mg/L) | 100 | 7.5 |
| T-Se (mg/L) | 1.0 | 1.0 |
| pH (-) | 10.6 | 7.0 |

**[Table 7] Elution Test Result of Dehydrated Sludge Cake**

| Water Quality Item | Sludge in Comparative Example |
|---|---|
| Dehydrated Cake Weight(g) | 103 |
| Water Content(%) | 64.8 |
| Elution Fluid | |
| T-CN (mg/L) | 7.9 |
| T-Se (mg/L) | 0.06 |

Consequently, it was confirmed that a system according to the examples of the present invention had a treatment performance which met the wastewater standards for coal gasification wastewater containing cyanide compounds, fluorine compounds, selenium compounds, ammoniacal nitrogen, and COD components. It was further confirmed that, in the examples, almost no hazardous cyanide elution occurred in the sludge produced in the treatment, and that although in the comparative example, sludge which must be disposed of as a waste subject to special control due to cyanide elution was produced, almost no such sludge was produced in the examples.

### [REFERENCE NUMERALS]

1, 3, 4, 5, 6, 7, 8, 9, 11 coal gasification wastewater treatment system, 10 high-temperature alkaline chlorination treatment device, 12 first coagulation sedimentation device, 14 selenium reduction device, 16 organic substance treatment device, 18 second coagulation sedimentation device, 20 salt water electrolysis system, 22 nitrification device, 24 denitrification device, 26 adsorption treatment device, 28 cyanide removal device, 30 softening device, 32 filtering device, 34 activated carbon adsorption device, 36 neutralizing device, 50 fluorine treatment device, 52 selenium treatment device, 100 pressure tank, 102 filter chamber, 104 pipe, 106 filter cloth, 108 slit, and 110 filter frame.

## Claims

1. A coal gasification wastewater treatment system for treating coal gasification wastewater containing a cyanide compound, a fluorine compound, a selenium compound, ammoniacal nitrogen, and a COD component, the coal gasification wastewater treatment system comprising:
(1) a cyanide/ammonia/COD treatment unit for decomposing at least the cyanide compound, the ammoniacal nitrogen, and the COD component using a high-temperature alkaline chlorination treatment in which an oxidant is added to be reacted while being heated,
(2) a fluorine treatment unit for removing the fluorine compound using at least one of a coagulation sedimentation treatment and an adsorption treatment, and
(3) a selenium treatment unit for removing the selenium compound by reducing the selenium compound, and then applying at least one of a removal-by-reduction treatment and an adsorption treatment to remove the reduced selenium compound,
wherein the fluorine treatment unit and the selenium treatment unit are arranged downstream of the cyanide/ammonia/COD treatment unit.

2. The coal gasification wastewater treatment system according to claim 1, wherein
the fluorine treatment unit removes the fluorine compound using the coagulation sedimentation treatment.

3. The coal gasification wastewater treatment system according to claim 1 or 2, wherein
the selenium treatment unit removes the selenium compound by reducing the selenium compound with at least one of metal and metal salt, and then applying the removal-by-reduction treatment that removes the reduced selenium compound.

4. The coal gasification wastewater treatment system according to claim 3, wherein
the metal and the metal salt are iron or iron salt.

5. The coal gasification wastewater treatment system according to claim 4, wherein
the iron salt is divalent iron salt.

6. The coal gasification wastewater treatment system according to any one of claims 3 to 5, wherein
the fluorine treatment unit is arranged downstream of the selenium treatment unit.

7. The coal gasification wastewater treatment system according to claim 1 or 2, wherein
the selenium treatment unit removes the selenium compound by reducing the selenium compound by a biological treatment, and then applying the removal-by-reduction treatment that removes the reduced selenium compound.

8. The coal gasification wastewater treatment system according to claim 7, wherein
the selenium treatment unit is arranged downstream of the fluorine treatment unit.

9. The coal gasification wastewater treatment system according to any one of claims 1 to 8, wherein
an adsorption treatment unit using an adsorbent which can adsorb at least one of the fluorine compound and the selenium compound is provided downstream of the fluorine treatment unit and the selenium treatment unit.

10. The coal gasification wastewater treatment system according to claim 1, wherein
the fluorine treatment unit in which the fluorine compound is removed by the adsorption treatment is used when the concentration of the fluorine compound in the coal gasification wastewater is 30 ppm or less, and
the selenium treatment unit in which the selenium compound is removed by the adsorption treatment is used when the concentration of the selenium compound in the coal gasification wastewater is 3 ppm or less.

11. The coal gasification wastewater treatment system according to any one of claims 1 to 10, wherein
a salt water electrolysis unit that supplies sodium hypochlorite as the oxidant is provided.

12. A coal gasification wastewater treatment method for treating coal gasification wastewater containing a cyanide compound, a fluorine compound, a selenium compound, ammoniacal nitrogen, and a COD component, the coal gasification wastewater treatment method comprising:
(1) a cyanide/ammonia/COD treatment process for decomposing at least the cyanide compound, the ammoniacal nitrogen, and the COD component using a high-temperature alkaline chlorination treatment in which an oxidant is added to be reacted while being heated,
(2) a fluorine treatment process for removing at least the fluorine compound using at least one of a coagulation sedimentation treatment and an adsorption treatment, and
(3) a selenium treatment process for removing the selenium compound by reducing the selenium compound, and then applying at least one of a removal-by-reduction treatment and an adsorption treatment to remove the reduced selenium compound,
wherein the fluorine treatment process and the selenium treatment process are performed after the cyanide/ammonia/COD treatment process.

13. The coal gasification wastewater treatment method according to claim 12, wherein
in the fluorine treatment process, the fluorine compound is removed by the coagulation sedimentation treatment.

14. The coal gasification wastewater treatment method according to claim 12 or 13, wherein
in the selenium treatment process, the selenium compound is reduced by reducing the selenium compound with at least one of metal and metal salt, and then applying the removal-by-reduction treatment that removes the reduced selenium compound.

15. The coal gasification wastewater treatment method according to claim 14, wherein
the metal and the metal salt are iron or iron salt.

16. The coal gasification wastewater treatment method according to claim 15, wherein
the iron salt is divalent iron salt.

17. The coal gasification wastewater treatment method according to any one of claims 14 to 16, wherein
the fluorine treatment process is performed after the selenium treatment process.

18. The coal gasification wastewater treatment method according to claim 12 or 13, wherein
in the selenium treatment method, the selenium compound is removed by reducing the selenium compound using a biological treatment, and then applying the removal-by-reduction treatment that removes the reduced selenium compound.

19. The coal gasification wastewater treatment method according to claim 18, wherein
the selenium treatment process is performed after the fluorine treatment process.

20. The coal gasification wastewater treatment method according to any one of claims 12 to 19, wherein
an adsorption treatment process using an adsorbent which can adsorb at least one of the fluorine compound and the selenium compound is performed after the fluorine treatment process and the selenium treatment process.

21. The coal gasification wastewater treatment method according to claim 12, wherein
the fluorine treatment process in which the fluorine compound is removed by the adsorption treatment is performed when the concentration of the fluorine compound in the coal gasification wastewater is 30 ppm or less, and
the selenium treatment process in which the selenium compound is removed by the adsorption treatment is performed when the concentration of the selenium compound in the coal gasification wastewater is 3 ppm or less.

22. The coal gasification wastewater treatment method according to any one of claims 12 to 21, wherein
in the cyanide/ammonia/COD treatment process, sodium hypochlorite produced by salt water electrolysis is supplied as the oxidant.
